# EUROPÄISCHE PATENTSCHRIFT

(11) **EP 2 809 819 B1**
(45) Veröffentlichungstag und Bekanntmachung des Hinweises auf die Patenterteilung: **30.03.2016**
(21) Anmeldenummer: 13709737.4
(22) Anmeldetag: 15.01.2013
(51) Int. Cl.: C22C 38/00

(54) **HÖCHSTFESTER MEHRPHASENSTAHL MIT VERBESSERTEN EIGENSCHAFTEN BEI HERSTELLUNG UND VERARBEITUNG**
ULTRAHIGH-STRENGTH MULTIPHASE STEEL HAVING IMPROVED PROPERTIES DURING PRODUCTION AND PROCESSING
ACIER MULTIPHASES TRÈS RÉSISTANT, AUX PROPRIÉTÉS AMÉLIORÉES LORS DE SA FABRICATION ET DE SON TRAITEMENT

(30) Priorität: 30.01.2012 DE 102012002079
(43) Veröffentlichungstag der Anmeldung: 10.12.2014
(73) Patentinhaber: Salzgitter Flachstahl GmbH, 38239 Salzgitter (DE)
(72) Erfinder: SCHULZ, Thomas, 38259 Salzgitter (DE); WEDEMEIER, Andreas, 38110 Braunschweig (DE); SPROCK, Wilfried, 38104 Braunschweig (DE); FLAXA, Volker, 38229 Salzgitter (DE); LUTHER, Friedrich, 30173 Hannover (DE); DENKS, Ingwer, 38302 Wolfenbüttel (DE); SCHULZ, Sven, 38268 Lengede (DE)
(74) Vertreter: Meissner, Peter E.
(86) Internationale Anmeldenummer: PCT/DE2013/000041
(87) Internationale Veröffentlichungsnummer: WO 2013/113304

(56) Entgegenhaltungen:
- EP-A1- 0 922 777
- EP-A1- 2 028 282
- EP-A1- 2 031 081
- US-A1- 2001 015 245
- BLECK W ET AL: "Microalloying of cold-formable multi phase steel grades", MATERIALS SCIENCE FORUM, TRANS TECH PUBLICATIONS LTD- SWITZERLAND, CH, Bd. 500-501, 1. November 2005 (2005-11-01) , Seiten 97-112, XP009116657, ISSN: 0255-5476

## Beschreibung

Die Erfindung betrifft einen höchstfesten Mehrphasenstahl mit Dual-, Bainit-, Martensit oder Komplexphasengefüge mit verbesserten Eigenschaften bei Herstellung und Verarbeitung insbesondere für den Fahrzeugleichtbau gemäß dem Oberbegriff des Patentanspruches 1. Des Weiteren betrifft die Erfindung ein Verfahren zur Herstellung von Stahlbändern aus einem solchen Stahl gemäß Anspruch 9.

Der heiß umkämpfte Automobilmarkt zwingt die Hersteller ständig nach Lösungen zur Senkung des Flottenverbrauches unter Beibehaltung eines größtmöglichen Komforts und Insassenschutzes zu suchen. Dabei spielt einerseits die Gewichtsersparnis aller Fahrzeugkomponenten eine entscheidende Rolle andererseits aber auch ein möglichst günstiges Verhalten der einzelnen Bauteile bei hoher statischer und dynamischer Beanspruchung im Betrieb wie auch im Crashfall. Dieser Notwendigkeit versuchen die Vormaterial-Lieferanten dadurch Rechnung zu tragen, dass durch die Bereitstellung höchstfester Stähle mit geringerer Blechdicke das Gewicht der Fahrzeugkomponenten bei gleichem und eventuell sogar verbessertem Bauteilverhalten reduziert werden kann.

Diese neu entwickelte Stähle müssen neben der geforderten Gewichtsreduzierung den hohen Materialanforderungen bezüglich Dehngrenze, Zugfestigkeit und Bruchdehnung genügen wie auch den Bauteilanforderungen nach Kantenrissunempfindlichkeit, Energieabsorption sowie definierte Verfestigungen über den Work-Hardening-Effekt und den Bake-Hardening-Effekt aufweisen. Darüber hinaus muss eine gute Verarbeitbarkeit gewährleistet werden. Dies betrifft sowohl die Prozesse beim Automobilhersteller (z. B. Umformen, Schweißen oder Lackieren) als auch die Fertigungsprozesse beim Vormaterial-Lieferanten (z. B. Oberflächenveredelung durch metallische oder organische Beschichtung).

Die an den Stahlwerkstoff geforderte Eigenschaftskombination stellt letztendlich einen bauteilspezifischen Kompromiss aus Einzeleigenschaften dar. Im Fahrzeugbau finden daher zunehmend Dualphasenstähle Anwendung, die aus einem ferritischen Grundgefüge bestehen, in das eine martensitische Zweitphase und möglicherweise eine weitere Phase mit Bainit und Restaustenit eingelagert ist. Die charakteristischen Verarbeitungseigenschaften der Dualphasenstähle, wie ein sehr niedriges Streckgrenzenverhältnis bei gleichzeitig sehr hoher Zugfestigkeit, eine starke Kaltverfestigung und eine gute Kaltumformbarkeit, sind hinreichend bekannt.

Zunehmend finden auch Mehrphasenstähle im Automobilbau Anwendung, wie Komplexphasenstähle, ferritisch-bainitische Stähle, bainitische Stähle sowie martensitische Stähle, die unterschiedliche Gefügezusammensetzungen aufweisen.

Komplexphasenstähle in warm- bzw. kaltgewalzter Ausführung sind Stähle, die kleine Anteile von Martensit, Restaustenit und/oder Perlit in einem ferritisch/bainitischen Grundgefüge enthalten, wobei durch eine verzögerte Rekristallisation oder durch Ausscheidungen von Mikrolegierungselementen eine extreme Kornfeinung bewirkt wird.

Ferritisch-bainitische Stähle in warmgewalzter Ausführung sind Stähle, die Bainit oder verfestigten Bainit in einer Matrix aus Ferrit und/oder verfestigten Ferrit enthalten. Die Verfestigung der Matrix wird durch eine hohe Versetzungsdichte, durch Kornfeinung und die Ausscheidung von Mikrolegierungselementen bewirkt.

Bainitische Stähle in warmgewalzter bzw. kaltgewalzter Ausführung sind Stähle, die sich durch eine sehr hohe Streckgrenze und Zugfestigkeit bei einer ausreichend hohen Dehnung für Kaltumformprozesse auszeichnen. Aufgrund der chemischen Zusammensetzung ist eine gute Schweißbarkeit gegeben. Das Gefüge besteht typischerweise aus Bainit und Ferrit. Vereinzelt können geringe Anteile anderer Phasen, wie z. B. Martensit und Restaustenit, enthalten sein.

Martensitische Stähle in warmgewalzter Ausführung sind Stähle, die durch thermomechanisches Walzen kleine Anteile von Ferrit und/oder Bainit in einem Grundgefüge aus Martensit enthalten. Die Stahlsorte zeichnet sich durch eine sehr hohe Streckgrenze und Zugfestigkeit bei einer ausreichend hohen Dehnung für Kaltumformprozesse aus. Innerhalb der Gruppe der Mehrphasenstähle weisen die martensitischen Stähle die höchsten Zugfestigkeitswerte auf.

Zum Einsatz kommen diese Stähle aktuell in Struktur-, Fahrwerks- und crashrelevanten Bauteilen, sowie als flexibel kaltgewalzte Bänder. Diese **T**ailor **R**olled **B**lank Leichtbau-Technologie (TRB^{®}) ermöglicht eine signifikante Gewichtsreduktion durch die belastungsangepasste Wahl der Blechdicke über die Bauteillänge.

Die Herstellung von TRB^{®}s mit Mehrphasengefüge ist mit heute bekannten Legierungen und verfügbaren kontinuierlichen Glühanlagen für stark variierende Blechdicken allerdings nicht ohne Einschränkungen, wie z. B. für die Wärmebehandlung vor dem Kaltwalzen, möglich. In Bereichen unterschiedlicher Blechdicke kann aufgrund eines bei den gängigen Prozessfenstern auftretenden Temperaturgefälles kein homogenes mehrphasiges Gefüge in kalt- wie auch warmgewalzten Stahlbändern eingestellt werden.

Üblicherweise werden kaltgewalzte Stahlbänder aus wirtschaftlichen Gründen im Durchlaufglühverfahren rekristallisierend zu gut umformbarem Feinblech geglüht. Abhängig von der Legierungszusammensetzung und dem Bandquerschnitt werden die Prozessparameter, wie Durchlaufgeschwindigkeit, Glühtemperaturen und Abkühlgeschwindigkeit, entsprechend den geforderten mechanisch-technologischen Eigenschaften mit dem dafür notwendigen Gefüge eingestellt.

Zur Einstellung des Dualphasengefüges wird das Warm- oder Kaltband im Durchlaufglühofen auf eine solche Temperatur aufgeheizt, dass sich während der Abkühlung die geforderte Gefügeausbildung einstellt. Gleiches gilt für die Einstellung eines Stahls mit Komplexphasengefüge, martensitischem, ferritisch-bainitischem sowie rein bainitischem Gefüge.

Wenn aufgrund hoher Korrosionsschutzanforderungen die Oberfläche des Warm- oder Kaltbandes schmelztauchverzinkt werden soll, erfolgt die Glühbehandlung üblicherweise in einer kontinuierlichen Feuerverzinkungsanlage, bei der die Wärmebehandlung oder Glühung und die nachgeschaltete Verzinkung in einem kontinuierlichen Prozess stattfinden.

Auch beim Warmband wird fallweise je nach Legierungskonzept das geforderte Gefüge erst bei der Glühbehandlung im Durchlaufofen eingestellt, um die geforderten mechanischen Eigenschaften zu realisieren.

Beim Durchlaufglühen von warm- oder kaltgewalzten Stahlbändern mit z. B. aus den Schriften EP 2028 282 A1 und EP 2031 081 A1 bekannten Legierungskonzepten für höchstfeste Dualphasenstähle mit Mindestzugfestigkeiten von ca. 950 MPa, besteht das Problem, dass nur ein kleines Prozessfenster für die Glühparameter vorhanden ist. Damit sind bei minimalen Querschnittsänderungen (Dicke, Breite) bereits Anpassungen der Prozessparameter für gleichmäßige mechanische Eigenschaften erforderlich.

Bei aufgeweiteten Prozessfenstern sind bei gleichen Prozessparametern die geforderten Bandeigenschaften auch bei größeren Querschnittsänderungen der zu glühenden Bänder möglich.

Dies gilt neben flexibel gewalzten Bändern mit unterschiedlichen Blechdicken über die Bandlänge vor allen Dingen auch bei Bändern mit unterschiedlicher Dicke und/oder unterschiedlicher Breite, die nacheinander geglüht werden müssen.

Eine homogene Temperaturverteilung ist gerade bei unterschiedlichen Dicken im Übergangsbereich von einem Band zum anderen nur schwierig zu erreichen. Dies kann bei Legierungszusammensetzungen mit zu kleinen Prozessfenstern bei der Durchlaufglühung dazu führen, dass z. B. das dünnere Band entweder zu langsam durch den Ofen gefahren wird und dadurch die Produktivität gesenkt wird, oder dass das dickere Band zu schnell durch den Ofen gefahren wird und die notwendigen Glühtemperatur zur Erreichung des gewünschten Gefüges nicht erreicht wird. Die Folgen sind vermehrter Ausschuss, mit entsprechenden Fehlleistungskosten.

Der entscheidende Prozessparameter ist somit die Einstellung der Geschwindigkeit bei der Durchlaufglühung, da die Phasenumwandlung temperatur- und zeitabhängig abläuft. Je unempfindlicher der Stahl in Bezug auf die Gleichmäßigkeit der mechanischen Eigenschaften bei Änderungen im Temperatur- und Zeitverlauf bei der Durchlaufglühung ist, desto größer ist somit das Prozessfenster.

Besonders gravierend wird das Problem eines zu engen Prozessfensters bei der Glühbehandlung, wenn belastungsoptimierte Bauteile aus Warm- oder Kaltband hergestellt werden sollen, die über die Bandlänge und Bandbreite (z. B. durch flexibles Walzen) variierende Blechdicken aufweisen.

Ein Verfahren zur Herstellung eines Stahlbandes mit unterschiedlicher Dicke über die Bandlänge wird z. B. in der DE 100 37 867 A1 beschrieben.

Bei Anwendung der bekannten Legierungskonzepte für die Gruppe der Mehrphasenstähle ist es aufgrund des engen Prozessfensters schon beim Durchlaufglühen unterschiedlich dicker Bänder nur schwer möglich, über die gesamte Bandlänge des Bandes gleichmäßige mechanische Eigenschaften zu erreichen. Komplexphasenstähle weisen zudem ein noch engeres Prozessfenster auf als Dualphasenstähle.

Bei flexibel gewalzten Kaltbändern aus Mehrphasenstählen bekannter Zusammensetzungen weisen wegen des zu kleinen Prozessfensters die Bereiche mit geringerer Blechdicke aufgrund der Umwandlungsvorgänge bei der Abkühlung entweder zu hohe Festigkeiten durch zu große Martensitanteile auf oder die Bereiche mit größerer Blechdicke erreichen zu geringe Festigkeiten durch zu geringe Martensitanteile. Homogene mechanisch-technologische Eigenschaften über die Bandlänge oder -breite sind mit den bekannten Legierungskonzepten beim Durchlaufglühen praktisch nicht zu erreichen.

Das Ziel, die resultierenden mechanisch-technologischen Eigenschaften in einem engen Bereich über Bandbreite und Bandlänge durch die gesteuerte Einstellung der Volumenanteile der Gefügephasen zu erreichen, hat oberste Priorität und ist deshalb nur durch ein vergrößertes Prozessfenster möglich. Die bekannten Legierungskonzepte für Mehrphasenstähle sind durch ein zu enges Prozessfenster charakterisiert und deshalb zur Lösung der vorliegenden Problematik, insbesondere bei flexibel gewalzten Bändern, ungeeignet. Mit den bekannten Legierungskonzepten sind derzeit nur Stähle einer Festigkeitsklasse mit definierten Querschnittsbereichen (Blechdicke und Bandbreite) darstellbar, so dass für unterschiedliche Festigkeitsklassen und oder Querschnittsbereiche veränderte Legierungskonzepte notwendig sind.

Stand der Technik ist, dass eine Zunahme der Festigkeit durch das mengenmäßige Steigern von Kohlenstoff und/oder Silizium und/oder Mangan und eine Zunahme der Festigkeit über die Gefügeeinstellungen und die Mischkristallverfestigung (Mischkristallhärtung) erreicht wird.

Ein derartiges Flachprodukt aus einem Mehrphasenstahl - wie etwa ein Stahlband - sowie verschiedene Verfahren zu seiner Herstellung sind aus US 2001/015245 A1 bekannt.

Durch die Mengensteigerung der vorgenannten Elemente verschlechtern sich jedoch zunehmend die Materialverarbeitungseigenschaften, beispielsweise beim Schweißen, Umformen und Schmelztauchveredeln.

Bei der Stahlherstellung zeigt sich allerdings auch ein Trend zur Reduzierung des Kohlenstoff- und/oder Mangangehaltes, um eine verbesserte Kaltverarbeitbarkeit sowie bessere Gebrauchseigenschaften zu erreichen.

Ein Beispiel ist der Lochaufweittest zur Beschreibung und Quantifizierung des Kantenrissverhaltens. Bei entsprechend optimierten Güten erwartet der Stahlanwender höhere Werte als beim Standardmaterial. Aber auch die Schweißeignung charakterisiert durch das Kohlenstoffäquivalent, rückt weiter in den Fokus.

Von der Automobilindustrie werden zunehmend Stahlgüten nachgefragt mit je nach Anwendungsfall deutlich unterschiedlichen Anforderungen hinsichtlich der Streckgrenze. Das führt zu Stahlentwicklungen mit vergleichsweise großem Streckgrenzenintervall bei üblichem Zugfestigkeitsintervall.

Ein niedriges Streckgrenzenverhältnis (Re/Rm) ist typisch für einen Dualphasenstahl und dient vor allem der Umformbarkeit bei Streck- und Tiefziehvorgängen.

Ein höheres Streckgrenzenverhältnis (Re/Rm) wie es für Komplexphasenstähle typisch ist, zeichnet sich auch durch den Widerstand gegen Kantenrisse aus. Dies lässt sich auf die geringeren Unterschiede in den Festigkeiten der einzelnen Gefügebestandteile zurückführen, was sich günstig auf eine homogene Verformung im Bereich der Schnittkante auswirkt.

Die analytische Landschaft zur Erreichung von Mehrphasenstählen mit Mindestzugfestigkeiten von 950 MPa ist sehr vielfältig geworden und zeigt sehr große Legierungsbereiche bei den festigkeitssteigernden Elementen Kohlenstoff, Mangan, Phosphor, Aluminium sowie Chrom und/oder Molybdän, wie auch in der Zugabe von Mikrolegierungen einzeln oder in Kombinationen, sowie in den materialcharakterisierenden Eigenschaften.

Das Abmessungsspektrum ist breit und liegt im Dickenbereich von 0,50 bis 3,00 mm, wobei mengenmäßig der Bereich zwischen 0,8 bis 2,1 mm relevant ist. Es finden überwiegend Spaltbandabmessungen aber auch Breitbänder bis 1700 mm Anwendung.

Der Erfindung liegt daher die Aufgabe zugrunde, ein neues Legierungskonzept für einen höchstfesten Mehrphasenstahl, mit dem das Prozessfenster für die Durchlaufglühung von Warm- oder Kaltbändern so erweitert werden kann, dass neben Bändern mit unterschiedlichen Querschnitten auch Stahlbänder mit über Bandlänge und ggf. Bandbreite variierender Dicke mit möglichst homogenen mechanisch-technologischen Eigenschaften erzeugt werden können. Außerdem soll ein Verfahren zur Herstellung eines aus diesem Stahl hergestellten Bandes angegeben werden.

Nach der Lehre der Erfindung wird diese Aufgabe gelöst durch einen Stahl mit folgenden Gehalten in Masse-%:

| | |
|---|---|
| C | 0,075 bis ≤ 0,105 |
| Al | 0,005 bis ≤ 0,060 |
| Si | 0,200 bis ≤ 0,650 |
| Mn | 1,750 bis ≤ 2,350 |
| P | ≤ 0,020 |
| S | ≤ 0,0050 |
| Cr | 0,200 bis ≤ 0,500 |
| Mo | 0,200 bis 0,500 |
| Ti | ≥ 0,005 bis ≤ 0,060 |
| Nb | ≥ 0,005 bis ≤ 0,060 |
| V | ≥ 0,005 bis ≤ 0,060 |
| B | ≥ 0,0010 bis ≤ 0,0060 |
| N | ≤ 0,0090 |

Rest Eisen, einschließlich üblicher stahlbegleitender oben nicht erwähnter Elemente. Dieser Stahl wird nach dem Verfahren gemäß dem kennzeichnenden Teil des Anspruchs 1 behandelt.

Der mit dieser Analyse vorgegebene Stahl bietet den Vorteil eines deutlich vergrößerten Prozessfensters im Vergleich zu den bekannten Stählen. Daraus resultiert eine erhöhte Prozesssicherheit beim Durchlaufglühen von Kalt- und Warmband mit Mehrphasengefüge. Somit können für durchlaufgeglühte Warm- oder Kaltbänder homogenere mechanisch-technologische Eigenschaften im Band oder im Übergangsbereich zweier Bänder auch bei unterschiedlichen Querschnitten und sonst gleichen Prozessparametern gewährleistet werden. Dies gilt für das Durchlaufglühen aufeinander folgender Bänder mit unterschiedlichen Bandquerschnitten wie auch für Bänder mit variierender Blechdicke über Bandlänge bzw. Bandbreite. Z. B. ist damit eine Prozessierung in ausgewählten Dickenbereichen, wie kleiner 1 mm Banddicke, 1 bis 2 mm Banddicke und größer 2 mm Banddicke möglich.

Werden erfindungsgemäß im Durchlaufglühverfahren erzeugte höherfeste Warm- oder Kaltbänder aus Mehrphasenstahl mit variierenden Blechdicken erzeugt, können aus diesem Material vorteilhaft belastungsoptimierte Bauteile umformtechnisch hergestellt werden.
Das erzeugte Material kann sowohl als Kalt- wie auch als Warmband über eine Feuerverzinkungslinie oder eine reine Durchlaufglühanlage erzeugt werden im dressierten und undressierten und auch im wärmebehandelten Zustand (Zwischenglühen) sowie im gereckten und nicht gereckten Zustand (Streckbiegerichten).

Gleichzeitig besteht die Möglichkeit, durch gezielte Variierung der Prozessparameter die Gefügeanteile so einzustellen, dass Stähle in unterschiedlichen Festigkeitsklasse, z. B. mit Zugfestigkeiten zwischen 750 MPa und 1000 MPa darstellbar sind.

Die mit der erfindungsgemäßen Legierungszusammensetzung erzeugten Stahlbänder zeichnen sich bei der Fertigung eines mehrphasigen bzw. bainitischen Stahles durch ein deutlich breiteres Prozessfenster hinsichtlich Glühtemperatur und Durchlaufgeschwindigkeit bei der interkritischen Glühung zwischen A_{c1} und A_{c3} bzw. bei einer austenitisierenden Glühung über A_{c3} mit abschließender gesteuerter Abkühlung im Vergleich zu den bekannten Legierungskonzepten aus.

Als vorteilhaft haben sich Glühtemperaturen von 700 bis 950°C herausgestellt. Abhängig von dem Gesamtprozess gibt es unterschiedliche Ansätze zur Realisierung der Wärmebehandlung.

Bei einer Durchlaufglühanlage ohne anschließende Schmelztauchveredelung wird das Band ausgehend von der Glühtemperatur mit einer Abkühlgeschwindigkeit von 15 bis 100°C/s auf eine Zwischentemperatur von 200 bis 250°C abgekühlt. Optional kann vorab mit einer Abkühlgeschwindigkeit von 15 bis 100°C/s auf eine vorherige Zwischentemperatur von 300 bis 500°C abgekühlt werden. Die Abkühlung bis zur Raumtemperatur erfolgt abschließend mit einer Abkühlgeschwindigkeit von 2 bis 30°C/s.

Bei einer Wärmebehandlung im Rahmen einer Schmelztauchveredelung gibt es zwei Möglichkeiten der Temperaturführung. Die Kühlung wie oben beschrieben wird vor dem Eintritt in das Schmelzbad angehalten und erst nach dem Austritt aus dem Bad bis zum Erreichen der Zwischentemperatur von 200 bis 250°C fortgesetzt. Abhängig von der Schmelzbadtemperatur ergibt sich dabei eine Haltetemperatur von 420 bis 470°C. Die Abkühlung bis zur Raumtemperatur erfolgt wieder mit einer Abkühlgeschwindigkeit von 2 bis 30°C/s.

Die zweite Variante der Temperaturführung bei der Schmelztauchveredelung beinhaltet das Halten der Temperatur für 1 bis 20 s bei der Zwischentemperatur von 200 bis 250°C und ein anschließendes Wiedererwärmen auf die zur Schmelztauchveredelung benötigte Temperatur von 420 bis 470°C. Das Band wird nach der Veredelung wieder auf 200 bis 250°C abgekühlt. Die Abkühlung auf Raumtemperatur erfolgt wieder mit einer Abkühlgeschwindigkeit von 2 bis 30°C/s.

Die Grundlage für das Erreichen eines breiten Prozessfensters ist die erfindungsgemäße Kombination der vier Mikrolegierungselemente Titan, Niob, Vanadium und Bor mit Zusatz Molybdän, mit einem Summengehalt von maximal 0,590%, um die geforderte Festigkeitsklasse nicht zu überschreiten

Titan bindet den Stickstoff ab, der deshalb nicht mehr für die Bildung von Bor-Nitrid zur Verfügung steht, wodurch erst Bor seine Wirkung entfalten kann. In diesem Fall bewirkt die Zugabe von Bor, welches frei vorliegt, eine Erhöhung der Härtbarkeit. Die Zugabe von Nb erhöht den Effekt nochmals deutlich.

Niob als effektivstes aller Mikrolegierungselemente bewirkt u. a. durch die Kornfeinung eine deutliche Festigkeitssteigerung.

Die festigkeitssteigernde Wirkung von Vanadium beruht fast allein auf der Ausscheidungshärtung. Vorteilhaft sind die hohe Löslichkeit im Austenit und der durch die tiefe Ausscheidungstemperatur verursachte große Volumenanteil an feinen Ausscheidungen.

Während der Einfluss von Bor auf die Aufhärtung nicht ohne Widersprüche in der Literatur diskutiert wird, ist das enorme Potential von Bor hinsichtlich der Einhärtung unumstritten. Die Mikrostruktur wird isotroper, weil Unterschiede in den Abkühlraten, die durch die Prozessführung oder die Geometrie des Bandes hervorgerufen werden, weniger starken Einfluss haben, was auch zu einem größeren Prozessfenster führt. Das freie Bor ist in der Lage eine verhältnismäßig homogene Mikrostruktur (gleiche Gefügeanteile) über die Blechdicke gesehen zu erzeugen. Gleiches gilt auch für den weniger stark ausgeprägten Einfluss von Temperaturgradienten, die über die Länge des Bandes oder im Bezug auf dessen Breite auftreten.

Die Zugabe von Molybdän verbessert die Härtbarkeit. Die Perlit- und Bainitumwandlung werden zu längeren Zeiten geschoben und die Martensitstarttemperatur gesenkt.

Bei klassischen Dualphasenstählen ist neben Mangan, Chrom und Silizium insbesondere auch der Kohlenstoff für die Beschaffenheit und Verteilung des Martensits von Bedeutung. Durch geringe Zugabe von Bor lässt sich ein vergleichsweise hoher Anteil des Kohlenstoffs substituieren. Dies wirkt sich ebenfalls positiv auf die Mikrostruktur aus, da der Kohlenstoff eines der am stärksten seigernden Elemente im Stahl ist. Dadurch sind Seigerungen, die zu lokal unterschiedlichen thermodynamischen Triebkräften hinsichtlich der Phasenausbildung führen. weniger stark ausgeprägt, wodurch wiederum eine höhere Robustheit gegenüber prozess- oder geometriebedingten Temperaturschwankungen erreicht wird.

Die angegebenen Mikrolegierungselemente entfalten ihre Wirkung in unterschiedlichen Prozessstufen. Durch die Zugabe von Titan und Niob insbesondere in Kombination mit Bor wird das Ferritgebiet sehr deutlich zu späteren Zeiten während der Abkühlung verschoben, so dass die Bildung von Ferrit in den prozesstypischen Zeiten oft gar nicht mehr möglich ist. In der Folge entstehen Gefüge mit hohen bainitischen Anteilen, woraus sich das Potenzial für Komplexphasenstähle und bainitische Stähle ableitet.

Die Karbid- und auch die Nitridbildung von Vanadium setzt erst ab Temperaturen um 1000°C bzw. noch nach der γ/α-Umwandlung ein, also wesentlich später als bei Titan und Niob. Vanadium hat somit durch die geringe Anzahl der im Austenit vorhandenen Ausscheidungen kaum eine kornfeinende Wirkung. Auch das Austenitkornwachstum wird durch die erst späte Ausscheidung der Vanadiumkarbide nicht gehemmt. Somit beruht die festigkeitssteigernde Wirkung fast allein auf der Ausscheidungshärtung.

Die Anteile von Ferrit werden dabei durch erhöhte Anteile von Bainit je nach Prozessparameter mehr oder weniger stark reduziert. Durch die Kombination der vier Mikrolegierungselemente mit Molybdän wird die zuvor beschriebene Werkstoffvielfalt ermöglicht.

Bei Versuchen hat sich gezeigt, dass allein die Mikrolegierungselemente-Kombination Niob, Titan und Bor nicht ausreichend ist, um ein breites Prozessfenster und den typischerweise hierfür geforderten Zugfestigkeitsbereich von mindestens 950 MPa für Warmband und mindestens 980 MPa für kaltnachgewalztes Warmband und Kaltband zu erreichen. Erst durch die zusätzliche Zugabe von Vanadium und Molybdän in den angegebenen Gehalten wurde dies möglich.

Durch die Einstellung eines niedrigen Kohlenstoffgehaltes von ≤ 0,105 % kann das Kohlenstoffäquivalent reduziert werden, wodurch die Schweißbarkeit verbessert und zu große Aufhärtungen beim Schweißen vermieden werden. Beim Widerstandspunktschweißen kann darüber hinaus die Elektrodenstandzeit deutlich erhöht werden.

Nachfolgend wird die Wirkung der Elemente in der erfindungsgemäßen Legierung näher beschrieben. Die Mehrphasenstähle sind typischerweise chemisch so aufgebaut, dass Legierungselemente mit und auch ohne Mikrolegierungselemente kombiniert werden. Begleitelemente sind unvermeidlich und werden im Analysenkonzept hinsichtlich ihrer Wirkung wenn notwendig berücksichtigt.

Begleitelemente sind Elemente, die bereits im Eisenerz vorhanden sind bzw. herstellungsbedingt in den Stahl gelangen. Aufgrund ihrer überwiegend negativen Einflüsse sind sie in der Regel unerwünscht. Es wird versucht, sie bis zu einem tolerierbaren Gehalt zu entfernen bzw. in unschädlichere Formen zu überführen.

Wasserstoff (H) kann als einziges Element ohne Gitterverspannungen zu erzeugen durch das Eisengitter diffundieren. Dies führt dazu, dass der Wasserstoff im Eisengitter relativ beweglich ist und während der Fertigung verhältnismäßig leicht aufgenommen werden kann. Wasserstoff kann dabei nur in atomarer (ionischer) Form ins Eisengitter aufgenommen werden.

Wasserstoff wirkt stark versprödend und diffundiert bevorzugt zu energetisch günstigen Stellen (Fehlstellen, Korngrenzen etc.). Dabei fungieren Fehlstellen als Wasserstofffallen und können die Verweildauer des Wasserstoffes im Werkstoff erheblich erhöhen.

Durch eine Rekombination zu molekularem Wasserstoff können Kaltrisse entstehen. Dieses Verhalten tritt bei der Wasserstoffversprödung oder bei wasserstoffinduzierter Spannungsrisskorrosion auf. Auch beim verzögerten Riss, dem sogenannten Delayed-Fracture, der ohne äußere Spannungen auftritt, wird Wasserstoff oft als Grund genannt.

Daher sollte der Wasserstoffgehalt im Stahl so gering wie möglich sein.

Sauerstoff (O): Im schmelzflüssigen Zustand hat der Stahl eine verhältnismäßig große Aufnahmefähigkeit für Gase, bei Raumtemperatur ist Sauerstoff jedoch nur in sehr geringen Mengen löslich. Analog zum Wasserstoff kann Sauerstoff nur in atomarer Form in den Werkstoff diffundieren. Wegen der stark versprödenden Wirkung sowie der negativen Auswirkungen auf die Alterungsbeständigkeit wird während der Herstellung so weit wie möglich versucht, den Sauerstoffgehalt zu reduzieren.

Zur Verringerung des Sauerstoffs existieren zum Einen verfahrenstechnische Ansätze wie eine Vakuumbehandlung und zum Anderen analytische Ansätze. Durch Zugabe von bestimmten Legierungselementen kann der Sauerstoff in ungefährlichere Zustände überführt werden. So ist ein Abbinden des Sauerstoffes über Mangan, Silizium und/oder Aluminium in der Regel üblich. Die dadurch entstehenden Oxide können jedoch als Fehlstellen im Werkstoff negative Eigenschaften hervorrufen. Bei einer feinen Ausscheidung, speziell von Aluminiumoxiden, kann hingegen auch eine Kornfeinung erfolgen.

Aus vorgenannten Gründen sollte deshalb der Sauerstoffgehalt im Stahl so gering wie möglich sein.

Stickstoff (N) ist ebenfalls ein Begleitelement aus der Stahlherstellung. Stähle mit freiem Stickstoff neigen zu einem starken Alterungseffekt. Der Stickstoff diffundiert schon bei geringen Temperaturen an Versetzungen und blockiert diese. Er bewirkt damit einen Festigkeitsanstieg verbunden mit einem rapiden Zähigkeitsverlust. Ein Abbinden des Stickstoffes in Form von Nitriden ist durch Zulegieren von Aluminium oder Titan möglich.

Aus vorgenannten Gründen ist der Stickstoffgehalt auf ≤ 0,0090%, vorteilhaft auf ≤ 0,0080% bzw. optimal auf ≤ 0,0070% bzw. auf bei der Stahlherstellung unvermeidbare Mengen begrenzt.

Schwefel (S) ist wie Phosphor als Spurenelement im Eisenerz gebunden. Er ist im Stahl unerwünscht (Ausnahme Automatenstähle), da er zu starker Seigerung neigt und stark versprödend wirkt. Es wird deshalb versucht, möglichst geringe Mengen an Schwefel in der Schmelze zu erreichen (z. B. durch eine Tiefvakuumbehandlung). Des Weiteren wird der vorhandene Schwefel durch Zugabe von Mangan in die relativ ungefährliche Verbindung Mangansulfid (MnS) überführt.

Die Mangansulfide werden während des Walzprozesses oft zeilenartig ausgewalzt und fungieren als Keimstellen für die Umwandlung. Dies führt vor allem bei diffusionsgesteuerter Umwandlung zu einem zeilig ausgeprägten Gefüge und kann bei stark ausgeprägter Zeiligkeit zu verschlechterten mechanischen Eigenschaften führen (z. B. ausgeprägte Martensitzeilen statt verteilte Martensitinseln, anisotropes Werkstoffverhalten, verminderte Bruchdehnung).

Aus vorgenannten Gründen ist der Schwefelgehalt auf ≤ 0,0050% bzw. auf bei der Stahlherstellung unvermeidbare Mengen begrenzt.

Phosphor (P) ist ein Spurenelement aus dem Eisenerz und wird im Eisengitter als Substitutionsatom gelöst. Phosphor steigert durch Mischkristallverfestigung die Härte und verbessert die Härtbarkeit.

Es wird allerdings in der Regel versucht, den Phosphorgehalt soweit wie möglich abzusenken, da er unter anderem durch seine geringe Diffusionsgeschwindigkeit stark zur Seigerung neigt und im hohen Maße die Zähigkeit vermindert. Durch die Anlagerung von Phosphor an den Korngrenzen treten Korngrenzenbrüche auf. Zudem setzt Phosphor die Übergangstemperatur von zähem zu sprödem Verhalten bis zu 300°C herauf. Während des Warmwalzens können oberflächennahe Phosphoroxide an den Korngrenzen zu Bruchaufreißungen führen. Durch das Zulegieren von geringen Mengen an Bor können die negativen Auswirkungen von Phosphor zum Teil kompensiert werden. Es wird vermutet, dass Bor die Korngrenzenkohäsion erhöht und die Phosphorsegregation an den Korngrenzen verringert.

In einigen Stählen wird er allerdings aufgrund der niedrigen Kosten und der hohen Festigkeitssteigerung in geringen Mengen (< 0,1%) als Mikrolegierungselement verwendet. Beispielsweise in höherfesten IF-Stählen (interstitial free) oder auch in einigen Legierungskonzepten für Dualphasenstählen.

Aus vorgenannten Gründen ist der Phosphorgehalt auf ≤ 0,020% bzw. auf bei der Stahlherstellung unvermeidbare Mengen begrenzt.

Legierungselemente werden dem Stahl in der Regel zugegeben, um gezielt bestimmte Eigenschaften zu beeinflussen. Dabei kann ein Legierungselement in verschiedenen Stählen unterschiedliche Eigenschaften beeinflussen. Die Wirkung hängt im Allgemeinen stark von der Menge und dem Lösungszustand im Werkstoff ab.

So kann einerseits Chrom in gelöster Form schon in geringen Mengen die Härtbarkeit von Stahl erheblich steigern. Andererseits bewirkt Chrom bei entsprechender Temperaturführung in Form von Chromcarbiden eine Teilchenverfestigung. Die damit verbundene Erhöhung der Anzahl von Keimstellen bei gleichzeitig gesenktem Gehalt an Kohlenstoff führt zu einer Herabsetzung der Härtbarkeit.

Die Zusammenhänge können demnach durchaus vielseitig und komplex sein. Im Folgenden soll auf die Wirkung der Legierungselemente näher eingegangen werden.

Kohlenstoff (C) gilt als das wichtigste Legierungselement im Stahl. Durch seine gezielte Einbringung bis zu 2,06 % wird Eisen erst zum Stahl. Oft wird während der Stahlherstellung der Kohlenstoffanteil drastisch abgesenkt. Bei Dualphasenstählen für eine kontinuierliche Schmelztauchveredelung beträgt sein Anteil maximal 0,23 %, ein Mindestwert ist nicht vorgegeben.

Kohlenstoff wird aufgrund seines vergleichsweise kleinen Atomradius interstitiell im Eisengitter gelöst. Die Löslichkeit beträgt dabei im α-Eisen maximal 0,02 % und im γ-Eisen maximal 2,06 %. Kohlenstoff steigert in gelöster Form die Härtbarkeit von Stahl erheblich.

Durch die unterschiedliche Löslichkeit werden ausgeprägte Diffusionsvorgänge bei der Phasenumwandlung notwendig, die zu sehr verschiedenen kinetischen Bedingungen führen können. Zudem erhöht Kohlenstoff die thermodynamische Stabilität des Austenits, was sich im Phasendiagramm in einer Erweiterung des Austenitgebiets zu niedrigeren Temperaturen zeigt. Mit steigendem zwangsgelösten Kohlenstoffgehalt im Martensit steigen die Gitterverzerrungen und damit verbunden die Festigkeit der diffusionslos entstandenen Phase.

Kohlenstoff ist zudem erforderlich um Carbide zu bilden. Ein nahezu in jedem Stahl vorkommender Vertreter ist der Zementit (Fe₃C). Es können sich jedoch auch wesentlich härtere Sondercarbide mit anderen Metallen wie zum Beispiel Chrom, Titan, Niob, Vanadium bilden. Dabei ist nicht nur die Art sondern auch die Verteilung und Größe der Ausscheidungen von entscheidender Bedeutung für die resultierende Festigkeitssteigerung. Um einerseits eine ausreichende Festigkeit und andererseits eine gute Schweißbarkeit sicherzustellen, werden deshalb der minimale C-Gehalt auf 0,075 % und der maximale C-Gehalt auf 0,105 % festgelegt.

Silizium (Si) bindet beim Vergießen Sauerstoff und vermindert somit Seigerungen sowie Verunreinigungen im Stahl. Zudem erhöht Silizium durch Mischkristallverfestigung die Festigkeit und das Streckgrenzenverhältnis des Ferrits bei nur geringfügig absinkender Bruchdehnung. Ein weiterer wichtiger Effekt ist, dass Silizium die Bildung von Ferrit zu kürzeren Zeiten verschiebt und somit die Entstehung von ausreichend Ferrit vor der Abschreckung ermöglicht. Durch die Ferritbildung wird der Austenit mit Kohlenstoff angereichert und stabilisiert. Bei höheren Gehalten stabilisiert Silizium im unteren Temperaturbereich speziell im Bereich der Bainitbildung durch Verhinderung von Carbidbildung den Austenit merklich.

Während des Warmwalzens kann sich bei hohen Siliziumgehalten stark haftender Zunder bilden, der die Weiterverarbeitung beeinträchtigen kann.

Beim kontinuierlichen Verzinken kann Silizium während des Glühens an die Oberfläche diffundieren und alleine oder zusammen mit Mangan filmartige Oxide bilden. Diese Oxide verschlechtern die Verzinkbarkeit durch Beeinträchtigung der Verzinkungsreaktion (Eisenlösung und Hemmschichtausbildung) beim Eintauchen des Stahlbandes in die Zinkschmelze. Dies äußert sich in einer schlechten Zinkhaftung und unverzinkten Bereichen. Durch eine geeignete Ofenfahrweise mit angepasstem Feuchtegehalt im Glühgas und/oder durch ein geringes Si/Mn-Verhältnis und/oder durch die Verwendung moderater Mengen an Silizium kann jedoch eine gute Verzinkbarkeit des Stahlbandes und eine gute Zinkhaftung sichergestellt werden.

Aus den vorgenannten Gründen werden der minimale Si-Gehalt auf 0,200 % und der maximale Si-Gehalt auf 0,650 % festgelegt.

Mangan (Mn) wird fast allen Stählen zur Entschwefelung zugegeben, um den schädlichen Schwefel in Mangansulfide zu überführen. Zudem erhöht Mangan durch Mischkristallverfestigung die Festigkeit des Ferrits und verschiebt die α-/γ-Umwandlung zu niedrigeren Temperaturen.

Ein Hauptgrund für das Zulegieren von Mangan in Dualphasenstählen ist die deutliche Verbesserung der Einhärtbarkeit. Aufgrund der Diffusionsbehinderung wird die Perlit- und Bainitumwandlung zu längeren Zeiten verschoben und die Martensitstarttemperatur gesenkt.

Mangan neigt wie Silizium zur Bildung von Oxiden auf der Stahloberfläche während der Glühbehandlung. In Abhängigkeit von den Glühparametern und den Gehalten an anderen Legierungselementen (insbesondere Si und Al) können Manganoxide (z. B. MnO) und/oder Mn-Mischoxide (z.B. Mn₂SiO₄) auftreten. Allerdings ist Mangan bei einem geringen Si/Mn bzw. Al/Mn Verhältnis als weniger kritisch zu betrachten, da sich eher globulare Oxide statt Oxidfilme ausbilden. Dennoch können hohe Mangangehalte das Erscheinungsbild der Zinkschicht und die Zinkhaftung negativ beeinflussen.

Der Mn-Gehalt wird deshalb auf 1,750 bis 2,350 % festgelegt.

Chrom Cr): In Dualphasenstählen wird durch die Zugabe von Chrom hauptsächlich die Einhärtbarkeit verbessert. Chrom verschiebt im gelösten Zustand die Perlit- und Bainitumwandlung zu längeren Zeiten und senkt dabei gleichzeitig die Martensitstarttemperatur.

Ein weiterer wichtiger Effekt ist, dass Chrom die Anlassbeständigkeit erheblich steigert, so dass es im Zinkbad zu fast keinen Festigkeitsverlusten kommt.

Chrom ist zudem ein Carbidbildner. Sollte Chrom in Carbidform vorliegen, muss die Austenitisierungstemperatur vor dem Härten hoch genug gewählt werden, um die Chromcarbide zu lösen. Ansonsten kann es durch die erhöhte Keimzahl zu einer Verschlechterung der Einhärtbarkeit kommen.

Chrom neigt ebenfalls dazu während der Glühbehandlung Oxide auf der Stahloberfläche zu bilden, wodurch sich die Verzinkungsqualität verschlechtern kann.

Der Cr-Gehalt wird deshalb auf Werte von 0,200 bis 0,500 % festgelegt.

Molybdän (Mo): Die Zugabe von Molybdän erfolgt ähnlich wie bei Chrom zur Verbesserung der Härtbarkeit. Die Perlit- und Bainitumwandlung wird zu längeren Zeiten geschoben und die Martensitstarttemperatur gesenkt.

Molybdän erhöht zudem die Anlassbeständigkeit erheblich, so dass im Zinkbad keine Festigkeitsverluste zu erwarten sind und bewirkt durch Mischkristallverfestigung eine Festigkeitssteigerung des Ferrits.

Der Mo-Gehalt wird in Abhängigkeit von der Abmessung, der Anlagenkonfiguration und der Gefügeeinstellung zulegiert, wobei dann die Mindestzugabe 0,200 % sein sollte, um eine Wirkung zu erzielen. Aus Kostengründen wird der Mo-Gehalt auf max. 0,500 % festgelegt, bzw. optimal auf ≥ 0,250 % und ≤ 0,450 %.

Kupfer (Cu): Der Zusatz von Kupfer kann die Zugfestigkeit sowie die Einhärtbarkeit steigern. In Verbindung mit Nickel, Chrom und Phosphor kann Kupfer eine schützende Oxidschicht an der Oberfläche bilden, die die Korrosionsrate deutlich reduzieren kann.

In Verbindung mit Sauerstoff kann Kupfer an den Korngrenzen schädliche Oxide bilden, die besonders für Warmumformprozesse negative Auswirkungen hervorrufen können. Der Gehalt an Kupfer ist deshalb bis auf bei der Stahlherstellung unvermeidbare Mengen begrenzt.

Andere Legierungselemente wie z. B. Nickel (Ni) oder Zinn (Sn) sind in ihren Gehalten auf bei der Stahlherstellung unvermeidbare Mengen begrenzt.

Mikrolegierungselemente werden in der Regel nur in sehr geringen Mengen zugegeben (< 0,1 %). Sie wirken im Gegensatz zu den Legierungselementen hauptsächlich durch Ausscheidungsbildung können aber auch in gelöstem Zustand die Eigenschaften beeinflussen. Trotz der geringen Mengenzugaben beeinflussen Mikrolegierungselemente die Herstellungsbedingungen sowie die Verarbeitungs- und Endeigenschaften stark.

Als Mikrolegierungselemente kommen in der Regel im Eisengitter lösliche Carbid- und Nitridbildner zum Einsatz. Eine Bildung von Carbonitriden ist aufgrund der vollständigen Löslichkeit von Nitriden und Carbiden ineinander ebenfalls möglich. Die Neigung, Oxide und Sulfide zu bilden ist bei den Mikrolegierungselementen in der Regel am stärksten ausgeprägt wird aber aufgrund anderer Legierungselemente in der Regel gezielt verhindert.

Diese Eigenschaft kann positiv genutzt werden, indem die im Allgemeinen schädlichen Elemente Schwefel und Sauerstoff abgebunden werden können. Die Abbindung kann aber auch negative Auswirkungen haben, wenn dadurch nicht mehr genügend Mikrolegierungselemente für die Bildung von Carbiden zur Verfügung stehen.

Typische Mikrolegierungselemente sind Aluminium, Vanadium, Titan, Niob und Bor. Diese Elemente können im Eisengitter gelöst werden und bilden mit Kohlenstoff und Stickstoff Carbide und Nitride.

Aluminium (Al) wird in der Regel dem Stahl zulegiert, um den im Eisen gelösten Sauerstoff und Stickstoff zu binden. Der Sauerstoff und Stickstoff wird so in Aluminiumoxide und Aluminiumnitride überführt. Diese Ausscheidungen können über eine Erhöhung der Keimstellen eine Kornfeinung bewirken und so die Zähigkeitseigenschaften sowie Festigkeitswerte steigern.

Aluminiumnitrid wird nicht ausgeschieden, wenn Titan in ausreichenden Mengen vorhanden ist. Titannitride haben eine geringere Bildungsenthalpie und werden bei höheren Temperaturen gebildet.

In gelöstem Zustand verschiebt Aluminium wie Silizium die Ferritbildung zu kürzeren Zeiten und ermöglicht so die Bildung von ausreichend Ferrit im Dualphasenstahl. Es unterdrückt zudem die Carbidbildung und führt so zu einer verzögerten Umwandlung des Austenits. Aus diesem Grund wird Al auch als Legierungselement in Restaustenitstählen verwendet, um einen Teil des Siliziums durch Aluminium zu substituieren. Der Grund für diese Vorgehensweise liegt darin, dass Al etwas weniger kritisch für die Verzinkungsreaktion als Si ist.

Der Al-Gehalt wir deshalb auf 0,005 bis maximal 0,060 % begrenzt.

Titan (Ti) bildet schon bei hohen Temperaturen sehr stabile Nitride (TiN) und Sulfide (TiS2). Diese lösen sich in Abhängigkeit des Stickstoffgehaltes zum Teil erst in der Schmelze auf. Wenn die so entstandenen Ausscheidungen nicht mit der Schlacke entfernt werden, bilden sie im Werkstoff durch die hohe Entstehungstemperatur grobe Partikel aus, die in der Regel nicht förderlich für die mechanischen Eigenschaften sind.

Ein positiver Effekt auf die Zähigkeit entsteht durch die Abbindung des freien Stickstoffes und Sauerstoffs. So schützt Titan andere gelöste Mikrolegierungselemente wie Niob vor der Abbindung durch Stickstoff. Diese können ihre Wirkung dann optimal entfalten. Nitride, die durch das Absinken des Sauerstoff- und Stickstoffgehalts erst bei tieferen Temperaturen entstehen, können zudem eine effektive Behinderung des Austenitkornwachstums bewirken.

Nicht abgebundenes Titan formt bei Temperaturen ab 1150°C Titancarbide und kann so eine Kornfeinung (Hemmung des Austenitkornwachstums, Kornfeinung durch verzögerte Rekristallisation und/oder Erhöhung der Keimzahl bei α/γ-Umwandlung) sowie eine Ausscheidungshärtung bewirken.

Der Ti-Gehalt weist deshalb Werte von ≥ 0,005 und ≤ 0,060 % auf. Vorteilhaft ist Titan auf Gehalte von ≥ 0,025 und ≤ 0,045 % aus Kostengründen zu begrenzen.

Niob (Nb) bewirkt eine starke Kornfeinung, da es am effektivsten von allen Mikrolegierungselementen eine Verzögerung der Rekristallisation bewirkt und zudem das Austenitkornwachstum hemmt.

Die festigkeitssteigernde Wirkung ist qualitativ höher als die von Titan einzuschätzen, ersichtlich durch den erhöhten Kornfeinungseffekt und die größere Menge an festigkeitssteigernden Teilchen (Abbindung des Titans zu TiN bei hohen Temperaturen). Niobcarbide bilden sich bei Temperaturen unterhalb von 1200°C. Bei Stickstoffabbindung mit Titan kann Niob durch Bildung von kleinen und in Hinblick auf ihre Wirkung effektiven Carbiden im unteren Temperaturbereich (kleinere Carbidgrößen) seine festigkeitssteigernde Wirkung erhöhen.

Ein weiterer Effekt des Niobs ist die Verzögerung der α/γ-Umwandlung und das Absenken der Martensitstarttemperatur im gelösten Zustand. Zum Einen geschieht dies durch den Solute-Drag-Effekt und zum Anderen durch die Kornfeinung. Diese bewirkt eine Festigkeitssteigerung des Gefüges und somit auch einen höheren Widerstand gegen die Volumenvergrößerung bei der Martensitbildung.

Prinzipiell ist das Zulegieren von Niob begrenzt bis zum Erreichen seiner Löslichkeitsgrenze. Diese begrenzt zwar die Menge an Ausscheidungen bewirkt aber beim Überschreiten vor allem eine frühe Ausscheidungsbildung mit recht groben Partikeln.

Die Ausscheidungshärtung kann somit vor allem bei Stählen mit geringem C-Gehalt (größere Übersättigung möglich) und bei Warmumformprozessen (verformungsinduzierte Ausscheidung) effektiv wirksam werden.

Der Nb-Gehalt wird deshalb auf Werte von ≥ 0,005 bis ≤ 0,060 % begrenzt, wobei aus Kostengründen der Nb-Gehalt vorteilhaft bei ≥ 0,025 und ≤ 0,045 % liegt.

Vanadium (V): Die Carbid- und auch die Nitridbildung von Vanadium setzt erst ab Temperaturen um 1000°C bzw. noch nach der α/γ-Umwandlung ein, also wesentlich später als bei Titan und Niob. Vanadium hat somit durch die geringe Anzahl der im Austenit vorhandenen Ausscheidungen kaum eine kornfeinende Wirkung. Auch das Austenitkornwachstum wird durch die erst späte Ausscheidung der Vanadiumcarbide nicht gehemmt.

Somit beruht die festigkeitssteigernde Wirkung fast allein auf der Ausscheidungshärtung. Ein Vorteil des Vanadiums ist die hohe Löslichkeit im Austenit und der durch die tiefe Ausscheidungstemperatur verursachte große Volumenanteil an feinen Ausscheidungen.

Der V-Gehalt wird deshalb auf Werte von ≥ 0,005 bis ≤ 0,060 % begrenzt, wobei aus Kostengründen der V-Gehalt vorteilhaft bei ≥ 0,015 und ≤ 0,045 % liegt.

Bor (B) bildet mit Stickstoff wie auch mit Kohlenstoff Nitride bzw. Carbide; in der Regel wird dies jedoch nicht angestrebt. Zum Einen bildet sich durch die geringe Löslichkeit nur eine kleine Menge an Ausscheidungen und zum Anderen werden diese zumeist an den Korngrenzen ausgeschieden. Eine Härtesteigerung an der Oberfläche wird nicht erreicht (Ausnahme Borieren mit Bildung von FeB und Fe₂Bin der Randzone eines Werkstücks).

Um eine Nitridbildung zu verhindern, wird in der Regel versucht, den Stickstoff durch affinere Elemente abzubinden. Besonders Titan kann dabei die Abbindung des gesamten Stickstoffes gewährleisten. Bor führt im gelösten Zustand in sehr geringen Mengen zu einer deutlichen Verbesserung der Einhärtbarkeit.

Der Wirkungsmechanismus von Bor kann so beschrieben werden, dass sich Boratome bei geeigneter Temperaturführung an den Korngrenzen anlagern und dort, indem sie die Korngrenzenenergie senken, die Entstehung von wachstumsfähigen Ferritkeimen deutlich erschweren. Bei der Temperaturführung ist darauf zu achten, dass Bor überwiegend atomar in der Korngrenze verteilt ist und nicht aufgrund zu hoher Temperaturen in Form von Ausscheidungen vorliegt.

Die Wirksamkeit von Bor wird mit steigender Korngröße und steigendem Kohlenstoffgehalt (> 0,8 %) herabgesetzt. Eine Menge über 60 ppm verursacht zudem eine sinkende Härtbarkeit, da Borcarbide auf den Korngrenzen als Keime fungieren.

Bor diffundiert aufgrund des geringen Atomdurchmessers außerordentlich gut und hat eine sehr hohe Affinität zu Sauerstoff, was zu einem Herabsetzen des Borgehaltes in Bereichen nahe der Oberfläche (bis zu 0,5 mm) führen kann. In diesem Zusammenhang wird von einer Glühung bei über 1000°C abgeraten. Dies ist zudem zu empfehlen, da Bor bei Glühtemperaturen über 1000°C zu einer starken Grobkornbildung führen kann.

Bor ist für den Prozess der kontinuierlichen Schmelztauchveredlung mit Zink ein extrem kritisches Element, da es schon bei geringsten Mengen alleine oder zusammen mit Mangan während der Glühbehandlung filmartige Oxide auf der Stahloberfläche ausbilden kann. Diese Oxide passivieren die Bandoberfläche und verhindern die Verzinkungsreaktion (Eisenlösung und Hemmschichtbildung). Ob sich filmartige Oxide ausbilden hängt sowohl von der Menge an freiem Bor und Mangan ab, als auch von den verwendeten Glühparametern (z. B. Feuchtegehalt im Glühgas, Glühtemperatur, Glühzeit). Höhere Mangangehalte und lange Glühzeiten führen eher zu globularen und weniger kritischen Oxiden. Durch einen erhöhten Feuchtegehalt im Glühgas ist es zudem möglich die Menge an borhaltigen Oxiden auf der Stahloberfläche zu reduzieren.

Aus vorgenannten Gründen wird der B-Gehalt auf Werte von ≥ 0,0010 bis ≤ 0,0060 % begrenzt, wobei für die Festigkeit der vorteilhafte Gehalt bei ≥ 0,0010 und ≤ 0,0050 % liegt.

Laboruntersuchungen haben gezeigt, dass durch eine austenitisierende Glühung eines Warmbandes über A_{c3} ein Komplexphasenstahl mit einer Mindestzugfestigkeit von 950 MPa erreicht werden kann.

Mit einer interkritischen Glühung zwischen A_{c1} und A_{c3} bzw. einer austenitisierenden Glühung über A_{c3} mit abschließender gesteuerter Abkühlung wurde ein Mehrphasenstahlband mit einer Dicke von 1 und 3 mm erzeugt, welches sich durch eine große Toleranz gegenüber Prozessschwankungen auszeichnet und sehr gleichmäßige Eigenschaften bei konstanten Prozessparametern aufweist.

Damit liegt ein deutlich aufgeweitetes Prozessfenster für die erfindungsgemäße Legierungszusammensetzung im Vergleich zu bekannten Legierungskonzepten vor.

Die Glühtemperaturen liegen für den erfindungsgemäßen Stahl zwischen 700 und 950°C, damit wird ein teilaustenitisches (Zweiphasengebiet) bzw. ein vollaustenitisches Gefüge (Austenitgebiet) bei der Glühung erreicht, abhängig von dem zu erzielenden Gefüge im Stahlband (Komplexphasengefüge).

Die Versuche zeigen, dass die eingestellten Gefügeanteile nach der interkritischen Glühung zwischen A_{c1} und A_{c3} bzw. der austenitisierenden Glühung über A_{c3} mit anschließender gesteuerter Abkühlung, auch nach einem weiteren Prozessschritt "Schmelztauchveredelung" bei Temperaturen zwischen 420 bis 470°C beispielsweise bei Z (Zink) und ZM (Zink-Magnesium) erhalten blieben.

Das schmelztauchveredelte Material kann sowohl als Warmband, als auch als kalt nachgewalztes Warmband bzw. Kaltband im dressierten (kaltnachgewalzten) bzw. undressierten Zustand und/oder streckbiegegerichteten bzw. nicht streckbiegerichteten Zustand gefertigt werden.

Stahlbänder, vorliegend als Warmband, kaltnachgewalztes Warmband bzw. Kaltband aus der erfindungsgemäßen Legierungszusammensetzung zeichnen sich außerdem bei der Weiterverarbeitung durch einen hohen Widerstand gegen kantennahe Rissbildung aus.

Durch eine Quasiisotropie des Stahlbandes ist darüber hinaus vorteilhaft ein Materialeinsatz quer, längs und diagonal zur Walzrichtung möglich.

Um die Kaltwalzbarkeit eines aus dem erfindungsgemäßen Stahl erzeugten Warmbandes zu gewährleisten, wird das Warmband erfindungsgemäß mit Endwalztemperaturen im austenitischen Gebiet oberhalb A_{c3} und Haspeltemperaturen oberhalb der Rekristallisationstemperatur erzeugt.

Weitere Merkmale, Vorteile und Einzelheiten der Erfindung ergeben sich aus der nachfolgenden Beschreibung von in einer Zeichnung dargestellten Ausführungsbeispielen. Es zeigen:
- **Figur 1:**: schematisch die Prozesskette für die Herstellung des erfindungsgemäßen Stahles
- **Figur 2:**: analytischer Vergleich
- **Figur 3:**: technologischer Vergleich
- **Figur 4:**: schematischer Zeit-Temperaturverlauf der Prozessschritte Warmwalzen und Durchlaufglühen
- **Figur 5:**: ZTU-Diagramm für einen erfindungsgemäßen Stahl
- **Figur 6:**: Temperatur-Zeit-Kurve (schematisch).

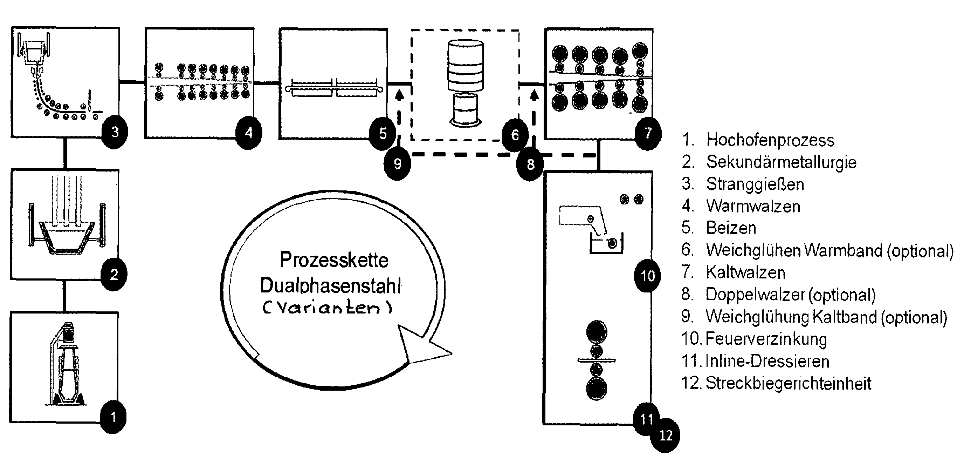

**Figur 1** zeigt schematisch die Prozesskette für die Herstellung des erfindungsgemäßen Stahles. Dargestellt sind die unterschiedlichen die Erfindung betreffenden Prozessrouten. Bis zur Position 5 (Beize) ist die Prozessroute für alle erfindungsgemäßen Stähle gleich, danach erfolgen je nach den gewünschten Ergebnissen abweichende Prozessrouten. Beispielsweise kann das gebeizte Warmband verzinkt werden oder kaltgewalzt und verzinkt werden. Oder es kann weichgeglüht kaltgewalzt und verzinkt werden.

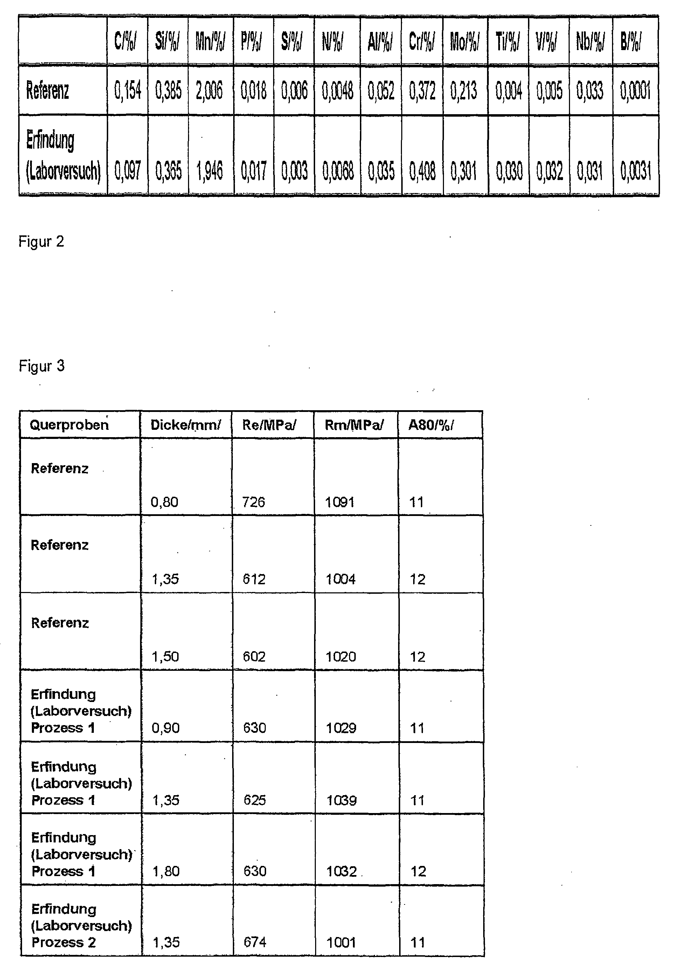

**Figur 2** zeigt die maßgeblichen Legierungselemente des erfindungsgemäßen Stahls im Vergleich zu einem Stahl der gleichen Liefergüte, der dem Stand der Technik (Referenz) entspricht.

**Figur 3** zeigt die mechanischen Kennwerte des erfindungsgemäßen Stahls im Vergleich mit einem Stahl der gleichen Liefergüte, der dem Stand der Technik (Referenz) entspricht. Alle Kennwerte entsprechen der normativen Vorgabe. Es ist erkennbar, dass der erfindungsgemäße Stahl ohne Anpassung der Wärmebehandlungsparameter homogenere Kennwerte aufweist als die Referenzstähle, obwohl der Dickenunterschied der erzeugten Bleche beim erfindungsgemäßen Stahl größer ist als bei den Referenzstählen. Dies ist ein Zeichen für die Erweiterung des Prozessfensters.

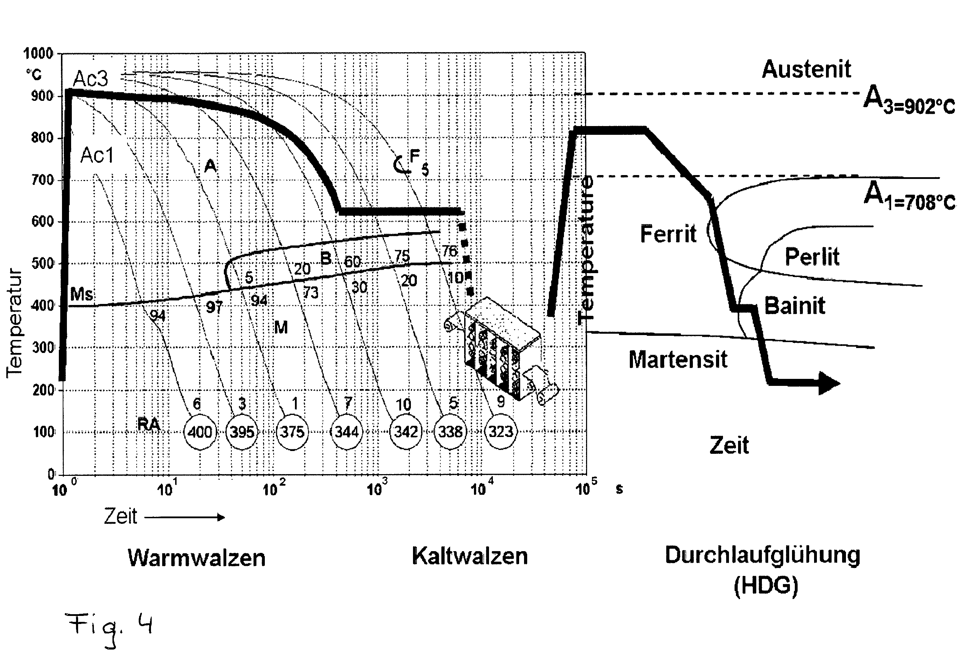

**Figur 4** zeigt schematisch den Zeit-Temperaturverlauf der Prozessschritte Warmwalzen und Durchlaufglühen von Bändern aus der erfindungsgemäßen Legierungszusammensetzung. Dargestellt ist die zeit- und temperaturabhängige Umwandlung für den Warmwalzprozess als auch für eine Wärmebehandlung nach dem Kaltwalzen. Besonderes Interesse liegt hierbei auf der Verschiebung der Ferritumwandlung zu späteren Zeiten. Hierdurch wird das Potenzial für Komplexphasenstähle und bainitische Stähle ermöglicht.

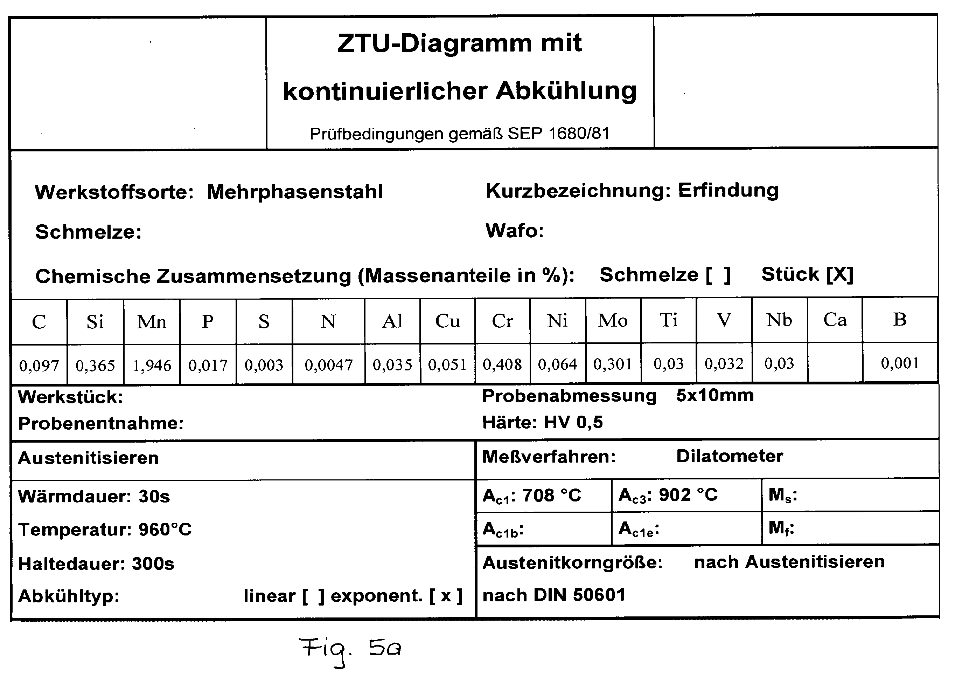

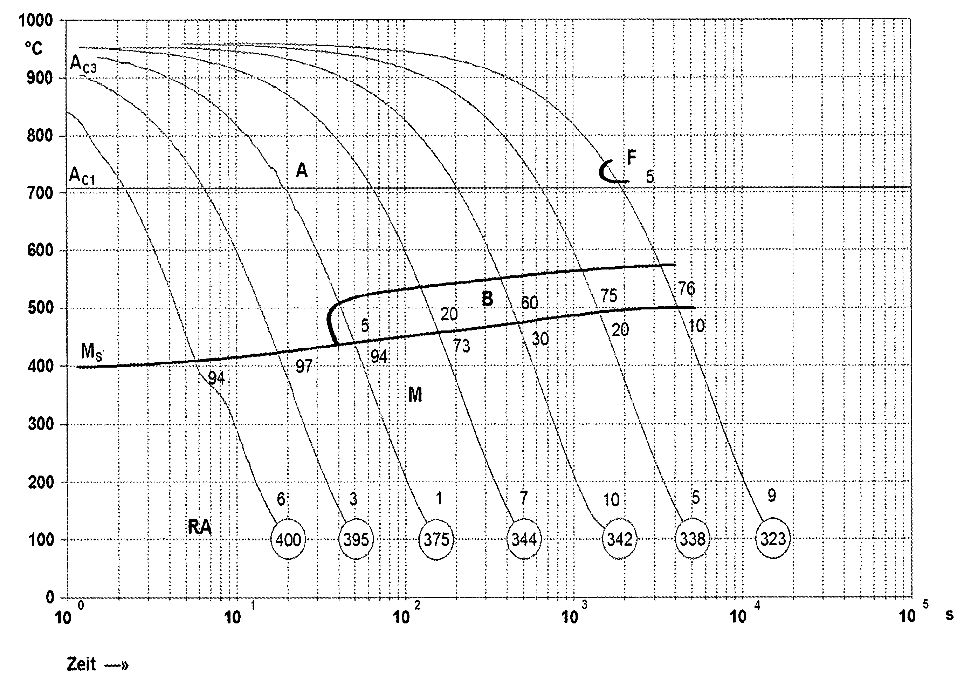

**Figur 5** zeigt ein ZTU-Diagramm für einen erfindungsgemäßen Stahl. Hierin ist das ermittelte ZTU-Diagramm mit der entsprechenden chemischen Zusammensetzung und der A_{c1} und A_{c3} Temperatur dargestellt. Durch Einstellung entsprechender Temperatur-Zeit-Verläufe bei der Abkühlung lässt sich vorteilhaft ein breites Spektrum an Gefügezusammensetzungen im Stahlwerkstoff einstellen.

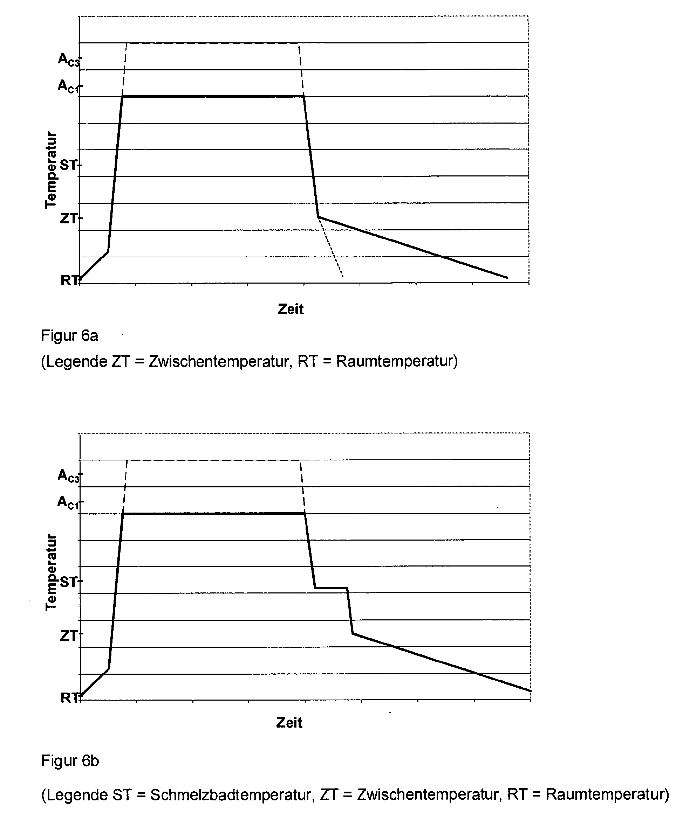

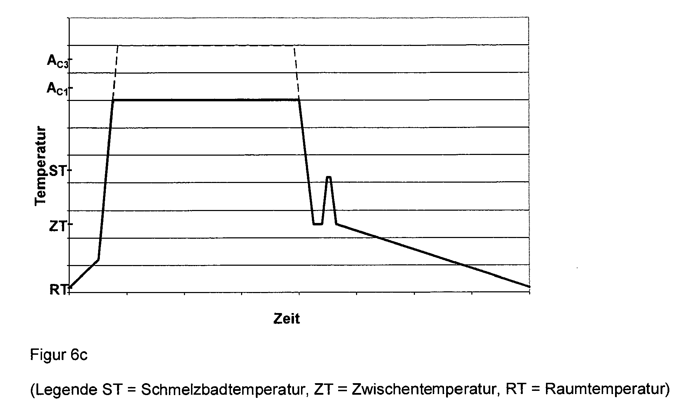

**Figur 6** zeigt schematisch die Temperatur-Zeit-Verläufe bei der Glühbehandlung und Abkühlung mit drei verschiedenen Varianten und jeweils verschiedenen Austenitisierungsbedingungen entsprechend der angemeldeten Ansprüche zum Verfahren.

Die Variante 1 (**Figur 6a**) zeigt die Glühung und Abkühlung vom erzeugten kalt- oder warmgewalzten Stahlband in einer Durchlaufglühanlage. Zuerst wir das Band auf eine Temperatur im Bereich von 700 bis 950°C aufgeheizt. Das geglühte Stahlband wird anschließend von der Glühtemperatur mit einer Abkühlgeschwindigkeit zwischen 15 und 100°C/s bis zu einer Zwischentemperatur von 200°C bis 250°C abgekühlt. Auf die Darstellung einer zweiten Zwischentemperatur (300 bis 500°C) wird in dieser schematischen Darstellung verzichtet. Anschließend wird das Stahlband mit einer Abkühlgeschwindigkeit zwischen 2 und 30°C/s bis zum Erreichen der Raumtemperatur an Luft abgekühlt bzw. die Kühlung mit einer Abkühlgeschwindigkeit zwischen 15 und 100°C/s wird bis auf Raumtemperatur beibehalten.

Die Variante 2 (**Figur 6b**) zeigt den Prozess gemäß Variante 1, jedoch wird die Kühlung des Stahlbandes zum Zwecke einer Schmelztauchveredelung kurzzeitig beim Durchlaufen des Schmelztauchgefäßes unterbrochen, um anschließend die Kühlung mit einer Abkühlgeschwindigkeit zwischen 15 und 100°C/s bis zu einer Zwischentemperatur von 200°C bis 250°C fortzusetzen. Anschließend wird das Stahlband mit einer Abkühlgeschwindigkeit zwischen 2 und 30°C/s bis zum Erreichen der Raumtemperatur an Luft abgekühlt.

Die Variante 3 (**Figur 6c**) zeigt ebenfalls den Prozess gemäß Variante 1 bei einer Schmelztauchveredelung, jedoch wird die Kühlung des Stahlbandes durch eine kurze Pause (1 bis 20 s) bei einer Zwischentemperatur im Bereich von 200°C bis 250°C unterbrochen und bis auf die Temperatur, die zum Schmelztauchveredeln notwendig ist (ca. 420°C-470°C) wieder erwärmt. Anschließend wird das Stahlband wieder bis zu einer Zwischentemperatur von 200°C bis 250°C gekühlt. Mit einer Abkühlgeschwindigkeit von 2 und 30°C/s erfolgt bis zum Erreichen der Raumtemperatur an Luft die abschließende Kühlung des Stahlbandes.

## Patentansprüche

1. Verfahren zur Herstellung eines kalt- oder warmgewalzten Stahlbandes aus einem höchstfesten Mehrphasenstahl mit kombinierten Eigenschaften, bei dem das geforderte Mehrphasengefüge während einer Durchlaufglühung erzeugt wird, insbesondere für den Fahrzeugleichtbau, bestehend aus den Elementen (Gehalte in Masse-%):
| | |
|---|---|
| C | 0,075 bis ≤ 0,105 |
| Al | 0,005 bis ≤ 0,060 |
| Si | 0,200 bis ≤ 0,650 |
| Mn | 1,750 bis ≤ 2,350 |
| P | ≤ 0,020 |
| S | ≤ 0,0050 |
| Cr | 0,200 bis ≤ 0,500 |
| Mo | 0,200 bis 0,500 |
| Ti | ≥ 0,005 bis ≤ 0,060 |
| Nb | ≥ 0,005 bis ≤ 0,060 |
| V | ≥ 0,005 bis ≤ 0,060 |
| B | ≥ 0,0010 bis ≤ 0,0060 |
| N | ≤ 0,0090 |
Rest Eisen, einschließlich üblicher stahlbegleitender oben nicht erwähnter Elemente., **dadurch gekennzeichnet,**
**dass** das kalt- oder warmgewalzte Stahlband in dem Durchlaufglühofen auf eine Temperatur im Bereich von 700 bis 950°C aufgeheizt wird und dass das geglühte Stahlband anschließend von der Glühtemperatur mit einer Abkühlgeschwindigkeit zwischen 15 und 100°C/s bis zu einer ersten Zwischentemperatur von 300 bis 500°C, folgend mit einer Abkühlgeschwindigkeit zwischen 15 und 100°C/s bis zu einer zweiten Zwischentemperatur von 200 bis 250°C abgekühlt wird, anschließend das Stahlband mit einer Abkühlgeschwindigkeit von 2 bis 30°C/s bis zum Erreichen der Raumtemperatur an Luft abgekühlt oder die Kühlung mit einer Abkühlgeschwindigkeit zwischen 15 und 100°C/s von der ersten Zwischentemperatur bis auf Raumtemperatur beibehalten wird.

2. Verfahren nach Anspruch 1,
**dadurch gekennzeichnet,**
**dass** der Mo-Gehalt ≥ 0,250 ≤ 0,450 % beträgt.

3. Verfahren nach den Ansprüchen 1 bis 2,
**dadurch gekennzeichnet,**
**dass** der Nb-Gehalt ≥ 0,025 bis ≤ 0,045% beträgt.

4. Verfahren nach den Ansprüchen 1 bis 3,
**dadurch gekennzeichnet,**
**dass** der Ti-Gehalt ≥ 0,025 ≤ 0,045 % beträgt.

5. Verfahren nach einem der Ansprüche 1 bis 4,
**dadurch gekennzeichnet,**
**dass** der V-Gehalt ≥ 0,015 ≤ 0,045 % beträgt.

6. Verfahren nach einem der Ansprüche 1 bis 5,
**dadurch gekennzeichnet,**
**dass** der B-Gehalt ≥ 0,0010 ≤ 0,0050 % beträgt.

7. Verfahren nach einem der Ansprüche 1 bis 6,
**dadurch gekennzeichnet,**
**dass** der N-Gehalt ≤ 0,0070 % beträgt.

8. Verfahren nach einem der Ansprüche 1 bis 7,
**dadurch gekennzeichnet,**
**dass** der Summengehalt Ti, Nb, V, Mo und B ≤ 0,590 % beträgt.

9. Verfahren nach Anspruch 1,
**dadurch gekennzeichnet,**
**dass** bei einer Schmelztauchveredelung nach dem Aufheizen und anschließenden Kühlen die Kühlung vor dem Eintreten in das Schmelzbad angehalten und nach der Schmelztauchveredelung die Kühlung mit einer Abkühlgeschwindigkeit zwischen 15 und 100°C/s bis zu einer Zwischentemperatur von 200 bis 250°C fortgesetzt wird, anschließend wird das Stahlband mit einer Abkühlgeschwindigkeit von 2 und 30°C/s bis zum Erreichen der Raumtemperatur an Luft abgekühlt.

10. Verfahren, nach Anspruch 9,
**dadurch gekennzeichnet,**
**dass** bei einer Schmelztauchveredelung nach dem Aufheizen und anschließenden Kühlen auf die Zwischentemperatur von 200 bis 250°C vor dem Eintreten in das Schmelzbad die Temperatur für 1 bis 20 s gehalten wird und anschließend das Stahlband auf die Temperatur von 420 bis 470°C wieder erwärmt wird und nach erfolgter Schmelztauchveredlung eine Kühlung mit einer Abkühlgeschwindigkeit zwischen 15 und 100°C/s bis zur Zwischentemperatur von 200 bis 250°C erfolgt und anschließend mit einer Abkühlgeschwindigkeit von 2 und 30°C/s an Luft bis zur Raumtemperatur abgekühlt wird.

11. Verfahren nach einem der Ansprüche 1 und 9 bis 10,
**dadurch gekennzeichnet,**
**dass** das Stahlband anschließend dressiert wird.

12. Verfahren nach mindestens einem der Ansprüche 1 und 9 bis 10,
**dadurch gekennzeichnet,**
**dass** das Stahlband anschließend streckbiegegerichtet wird.

## Claims

1. A method for the production of a cold-rolled or hot-rolled steel strip from an ultra-high-strength multiphase steel having combined properties, in which the required multiphase structure is produced during a continuous annealing operation, in particular for lightweight vehicle construction, consisting of the elements (contents in % by weight):
| | |
|---|---|
| C | 0.075 to ≤ 0.105 |
| Al | 0.005 to ≤ 0.060 |
| Si | 0.200 to ≤ 0.650 |
| Mn | 1.750 to ≤ 2.350 |
| P | ≤ 0.020 |
| S | ≤ 0.0050 |
| Cr | 0.200 to ≤ 0.500 |
| Mo | 0.200 to 0.500 |
| Ti | ≥ 0.005 to ≤ 0.060 |
| Nb | ≥ 0.005 to ≤ 0.060 |
| V | ≥ 0.005 to ≤ 0.060 |
| B | ≥ 0.0010 to ≤ 0.0060 |
| N | ≤ 0.0090 |
remainder iron, including usual steel-accompanying elements not mentioned above, **characterised in that**
the cold-rolled or hot-rolled steel strip is heated to a temperature in the range of 700 to 950°C in the continuous annealing furnace, and **in that** the annealed steel strip is then cooled from the annealing temperature at a cooling rate of between 15 and 100°C/s as far as a first intermediate temperature of 300 to 500°C, following at a cooling rate of between 15 and 100°C/s as far as a second intermediate temperature of 200 to 250°C, then the steel strip is cooled in air at a cooling rate of 2 to 30°C/s until room temperature is reached, or the cooling is maintained at a cooling rate of between 15 and 100°C/s from the first intermediate temperature as far as room temperature.

2. A method according to Claim 1,
**characterised in that**
the Mo content is ≥ 0.250 [to] ≤ 0.450%.

3. A method according to Claims 1 to 2,
**characterised in that**
the Nb content is ≥ 0.025 to ≤ 0.045%.

4. A method according to Claims 1 to 3,
**characterised in that**
the Ti content is ≥ 0.025 [to] ≤ 0.045%.

5. A method according to one of Claims 1 to 4,
**characterised in that**
the V content is ≥ 0.015 [to] ≤ 0.045%.

6. A method according to one of Claims 1 to 5,
**characterised in that**
the B content is ≥ 0.0010 [to] ≤ 0.0050%.

7. A method according to one of Claims 1 to 6,
**characterised in that**
the N-content is ≤ 0.0070%.

8. A method according to one of Claims 1 to 7,
**characterised in that**
the total content of Ti, Nb, V, Mo and B is ≤ 0.590%.

9. A method according to Claim 1,
**characterised in that**
in the case of hot-dip coating after the heating and subsequent cooling the cooling is halted before entry into the melt bath, and after the hot-dip coating the cooling is continued at a cooling rate of between 15 and 100°C/s as far as an intermediate temperature of 200 to 250°C, then the steel strip is cooled in air at a cooling rate of [between] 2 and 30°C/s until room temperature is reached.

10. A method according to Claim 9,
**characterised in that**
in the case of a hot-dip coating after the heating and subsequent cooling to the intermediate temperature of 200 to 250°C before entry into the melt bath, the temperature is held for 1 to 20 s and then the steel strip is reheated to the temperature of 420 to 470°C, and once hot-dip coating has taken place cooling at a cooling rate of between 15 and 100°C/s as far as the intermediate temperature of 200 to 250°C takes place and then cooling in air takes place at a cooling rate of [between] 2 and 30°C/s as far as room temperature.

11. A method according to one of Claims 1 and 9 to 10,
**characterised in that**
the steel strip is then skin pass rolled.

12. A method according to at least one of Claims 1 and 9 to 10,
**characterised in that**
the steel strip is then tension-levelled.

## Revendications

1. Procédé pour la fabrication d'un ruban d'acier laminé à froid ou à chaud en un acier multiphases ultrarésistant avec des propriétés combinées, dans lequel la structure multiphases exigée est produite lors d'un recuit continu, en particulier pour la construction légère automobile, se composant des éléments suivants (teneurs en % massique) :
C 0,075 à ≤ 0,105
Al 0,005 à ≤ 0,060
Si 0,200 à ≤ 0,650
Mn 1,750 à ≤ 2,350
P ≤ 0,020
S ≤ 0,0050
Cr 0,200 à ≤ 0,500
Mo 0,200 à 0,500
Ti ≥ 0,005 à ≤ 0,060
Nb ≥ 0,005 à ≤ 0,060
V ≥ 0,005 à ≤ 0,060
B ≥ 0,0010 à ≤ 0,0060
N ≤ 0,0090
le reste étant du fer, y compris des éléments usuels d'accompagnement de l'acier non mentionnés ci-dessus,
**caractérisé en ce**
**que** le ruban d'acier laminé à froid ou à chaud dans le four de recuit continu est chauffé à une température dans la plage de 700 à 950 °C et en ce que le ruban d'acier recuit est ensuite refroidi de la température de recuit avec une vitesse de refroidissement comprise entre 15 et 100 °C/s jusqu'à une première température intermédiaire de 300 à 500 °C, puis avec une vitesse de refroidissement comprise entre 15 et 100 °C/s jusqu'à une deuxième température intermédiaire de 200 à 250 °C, le ruban d'acier étant ensuite refroidi à l'air avec une vitesse de refroidissement de 2 à 30 °C/s jusqu'à atteindre la température ambiante ou bien le refroidissement étant maintenu avec une vitesse de refroidissement comprise entre 15 et 100 °C/s de la première température intermédiaire jusqu'à la température ambiante.

2. Procédé selon la revendication 1,
**caractérisé en ce**
**que** la teneur en Mo est ≥ 0,250 ≤ 0,450 %.

3. Procédé selon les revendications 1 à 2,
**caractérisé en ce**
**que** la teneur en Nb est ≥ 0,025 à ≤ 0,045 %.

4. Procédé selon les revendications 1 à 3,
**caractérisé en ce**
**que** la teneur en Ti est ≥ 0,025 ≤ 0,045 %.

5. Procédé selon l'une des revendications 1 à 4,
**caractérisé en ce**
**que** la teneur en V est ≥ 0,015 ≤ 0,045 %.

6. Procédé selon l'une des revendications 1 à 5,
**caractérisé en ce**
**que** la teneur en B est ≥ 0,0010 ≤ 0,0050 %.

7. Procédé selon l'une des revendications 1 à 6,
**caractérisé en ce**
**que** la teneur en N est ≤ 0,0070 %.

8. Procédé selon l'une des revendications 1 à 7,
**caractérisé en ce**
**que** la teneur de totalisation de Ti, Nb, V, Mo et B est ≤ 0,590 %.

9. Procédé selon la revendication 1,
**caractérisé en ce**
**que**, lors d'un finissage par immersion à chaud après le chauffage et un refroidissement qui s'en suit, le refroidissement est interrompu avant l'entrée dans le bain de fusion et après le finissage par immersion à chaud, le refroidissement se poursuivant avec une vitesse de refroidissement comprise entre 15 et 100 °C/s jusqu'à une température intermédiaire de 200 à 250 °C, le ruban d'acier étant ensuite refroidi à l'air avec une vitesse de refroidissement de 2 et 30 °C/s jusqu'à l'atteinte de la température ambiante.

10. Procédé selon la revendication 9,
**caractérisé en ce**
**que**, en cas d'un finissage par immersion à chaud après le chauffage et le refroidissement qui s'en suit à la température intermédiaire de 200 à 250 °C avant l'entrée dans le bain de fusion, la température est maintenue pendant 1 à 20 s et le ruban d'acier étant ensuite de nouveau chauffé à la température de 420 à 470 °C et une fois le finissage par immersion à chaud effectué, un refroidissement avec une vitesse de refroidissement comprise entre 15 et 100 °C/s jusqu'à la température intermédiaire de 200 à 250 °C ayant lieu, et ensuite un refroidissement à l'air ayant lieu avec une vitesse de refroidissement de 2 et 30 °C/s jusqu'à la température ambiante.

11. Procédé selon l'une des revendications 1 et 9 à 10,
**caractérisé en ce**
**que** le ruban d'acier est ensuite dressé.

12. Procédé selon l'une au moins des revendications 1 et 9 à 10,
**caractérisé en ce**
**que** le ruban d'acier est ensuite soumis à un dressage par traction et flexion.
